# NEUE EUROPÄISCHE PATENTSCHRIFT

(11) **EP 2 231 380 B2**
(45) Veröffentlichungstag und Bekanntmachung des Hinweises auf die Entscheidung über den Einspruch: **28.02.2018**
(45) Hinweis auf die Patenterteilung: 21.09.2011
(21) Anmeldenummer: 09701901.2
(22) Anmeldetag: 15.01.2009
(51) Int. Cl.: B29C 47/02, B60R 13/02

(54) **EXTRUSIONSLEISTE**
EXTRUDED STRIP
BAGUETTE EXTRUDÉE

(30) Priorität: 15.01.2008 DE 202008000573 U
(43) Veröffentlichungstag der Anmeldung: 29.09.2010
(73) Patentinhaber: Kunststoff-Technik Scherer & Trier GmbH & Co. KG, 96247 Michelau (DE)
(72) Erfinder: BERTHOLD, Josef, 96110 Würgau/Scheßlitz (DE)
(74) Vertreter: Weickmann & Weickmann PartmbB
(86) Internationale Anmeldenummer: PCT/EP2009/000219
(87) Internationale Veröffentlichungsnummer: WO 2009/090066

(56) Entgegenhaltungen:
- EP-A- 1 386 769
- EP-A1- 0 816 175
- EP-B1- 1 319 578
- WO-A-2006/081647
- DE-A1- 2 910 320
- DE-U1- 9 401 563
- DE-U1-202006 010 859
- FR-A1- 2 811 623
- GB-A- 2 194 926
- JP-A- 59 133 033
- US-B1- 6 402 874

## Beschreibung

Die Erfindung betrifft eine lackierte Extrusionsleiste, insbesondere für Kraftfahrzeuge, insbesondere umfassend einen Hauptkörper mit einer lackierten Sichtseite und wenigstens einen an den Hauptkörper anextrudierten Dichtungskörper.

Derartige Extrusionsleisten zeichnen sich aufgrund des Herstellungsverfahrens durch niedrige Herstellungskosten aus, sowie durch ein attraktives Äußeres aufgrund der Lackierung. So kann der gleiche Farbton wie der des Leistenträgers, z.B. der Kraftfahrzeugkarosserie, gewählt werden oder auch ein Kontrastton oder ein Metalleffekt-Lack, der z.B. den Eindruck einer Chromleiste erweckt. Zudem kann eine Zweifarbigkeit erzielt werden.

Es sind unterschiedliche Lackier-Methoden im Einsatz wie herkömmlicherweise das Spritzlackieren oder seit neuerem auch das Tauchbad-Lackieren. Wenn die Extrusionsleiste mit einem oder mehreren Dichtungskörpern versehen ist, die jeweils mit einer Dichtungsfläche am Leistenträger, z.B. am Kraftfahrzeugblech, abdichtend anliegen, muss vor dem Lackieren zumindest die Dichtungsfläche abgedeckt sein, da Lack auf der Dichtungsfläche die Dichtungsfunktion beeinträchtigen würde. Herkömmlicherweise wird hierzu der Dichtungskörper mit einer gesonderten Lackierungsmaske abgedeckt, z.B. in Form eines vor dem Lackieren aufgeklebten Klebebandes. Nach dem Lackieren wird die Lackierungsmakse wieder entfernt.

Mit Hilfe derartiger gesondert angebrachter Lackierungsmasken lassen sich auch mehrfarbige Extrusionsleisten herstellen.

Die EP 1 386 769 A zeigt eine als Dichtungskörper für ein Kraftfahrzeug ausgebildete Extrusionsleiste, mit einem Dekorkörper, z.B. in Form eines Metallbandes. Dabei wird der ggf. vorher lackierte Dekorkörper während der Extrusion in den Dichtungskörper eingefügt, derart, dass auf der Oberfläche des Dekorkörpers eine abziehbare dünne Haut aus Dichtungskörpermaterial erzeugt wird. Die Haut soll den Dekorkörper während folgender Arbeitsschritte, beispielsweise dem Einbau ins Fahrzeug, schützen und kann dann zum Freilegen der ggf. lackierten Dekorfläche des Dekorkörpers entfernt werden. FR 2811623 A1 und EP 0612568 A1 offenbaren jeweils Extrusionsleisten mit einem Hauptkörper und einem durch Koextrusion mit dem Hauptkörper verbundenen Dichtungskörper, sowie einem Abschattungselement, das aus dem gleichen Material wie der Dichtungskörper hergestellt und durch Extrusion einstückig mit diesem ausgebildet ist. Das Abschattungselement dient dazu, den Dichtungskörper beim Spritzlackieren abzuschatten und somit zu verhindern, dass Lack auf den Dichtungskörper gelangt. Nach dem Lackieren kann das Abschattungselement, welches vermittels einer oder mehrere Sollbruchstellen mit dem Dichtungskörper verbunden ist, von diesem abgetrennt werden.

Der Erfindung liegt die Aufgabe zugrunde, eine lackierte jedoch wenigstens einen unlackierten Bereich aufweisende Extrusionsleiste mit vereinfachter Herstellbarkeit und zuverlässiger Abdeckung des zu schützenden Bereichs beim Lackieren bereitzustellen.

Diese Aufhabe wird durch die Merkmale des Anspruchs 1 gelöst.

Der separate Herstellungsschritt des Abdekkens oder Maskierens des Dichtungskörpers bzw unlakkierten Bereiches entfällt erfindungsgemäß. Es ist lediglich erforderlich, das Koextrusionswerkzeug einmalig zu modifizieren derart, dass beim Extrudieren der Leiste die Abdeckschicht mit koextrudiert wird.

Wenn man die Abdeckschicht zur teilweisen Abdeckung der zu lackierenden Schauseite der Extrusionsleiste einsetzt, erzielt man nach dem Abziehen der Abdeckschicht eine attraktive Zweifarbigkeit. Im Falle einer Extrusionsleiste umfassend einen Hauptkörper mit einer lackierten Schauseite und wenigstens einen an den Hauptkörper anextrudierten Dichtungskörper kann man mit besonderem Vorteil den Abdeckfilm an den wenigstens einen Dichtungskörper anextrudieren, so dass dieser zumindest eine Dichtungsfläche des Dichtungskörpers abdeckt. Beim Lackieren der Extrusionsleiste muss nicht darauf geachtet werden, dass die Dichtungsfläche frei von Lack bleibt. Es kann ohne weiteres auch eine Tauchbadlackierung vorgenommen werden. Nach dem Lackieren wird die Abdeckschicht abgezogen, so dass dann die Dichtfläche frei liegt und zuverlässige Dichtfunktion gewährleistet ist.

Um das Abziehen der Abdeckschicht zu erleichtern, wird in Weiterbildung der Erfindung vorgeschlagen, diese mit einer Abziehhilfe zu versehen, die dann erforderlichenfalls auch ein maschinelles Abziehen der Abdeckschicht ermöglicht. Besonders bevorzugt wird hierzu die Abdeckschicht mit einem frei abstehenden Steg versehen, der manuell oder maschinell ergriffen werden kann. Einen besonders sicheren Halt gewährleistet die erfindungsgemäß vorgeschlagene Verdickung am freien Stegrand. Diese kann beispielsweise in einen Kanal einer Bearbeitungsstation eingeführt werden, der sich an eine Lackierstation und eine zwischengeschaltete Trocknungsstation anschließt. In dem weiteren Verlauf, in dem sich der Kanal zunehmend von der Leiste entfernt, wird die Abdeckschicht zunehmend von der Leiste abgezogen und entfernt.

Die Extrusionsleiste, ggf. der Hauptkörper kann von einem gegebenenfalls mehrschichtigen Kunststoffteil gebildet sein oder von einem reinen Metallteil. Besonders bevorzugt ist eine Komposit-Konstruktion, bei der der Hauptkörper von einem bevorzugt vorgeformten Metallband mit aufextrudierter Kunststoffschicht, vorzugsweise PVC-Schicht, gebildet ist. Das vorgeformte Metallband sorgt für die notwendige Stabilität und Biegesteifigkeit, insbesondere für im wesentlichen gleiche thermische Ausdehnung wie der Leistenträger, insbesondere das Karosserieblech. Die zusätzliche Kunststoffschicht erlaubt den Einsatz eines Metallbands reduzierter Wandstärke, was wiederum die Herstellungskosten reduziert. Es sind verschiedene Leistenformen denkbar. Bevorzugt ist die Ausbildung als bandförmiger Hauptkörper mit jeweils einem Dichtungskörper an den beiden Bandrändern.

Zuverlässige Dichtungsfunktion wird gewährleistet, wenn der wenigstens eine Dichtungskörper eine Dichtlippe aufweist. Da diese definitionsgemäß nur mit einer vergleichsweise kleinen Dichtfläche, im Idealfall mit einer Dichtungslinie, mit dementsprechend hoher Flächenpressung am Träger ggf. an der Karosserie anliegt, ist stets ausreichende Dichtwirkung sichergestellt.

Um erfindungsgemäß sicherzustellen, dass die Abdeckschicht einerseits leicht abzuziehen ist und andererseits Lack auf der Abdeckschicht so vollflächig anhaftet, dass beim Abziehen der Abdeckschicht keine Lackbrücken oder Lackflusen entstehen sondern eine gleichmäßig geradlinige Lackschichtbegrenzungslinie bildet, wird vorgeschlagen, dass der Dichtungskörper mit einem Elastomer gebildet ist, und dass die Abdeckschicht mit einem Thermoplasten gebildet ist.

Als Elastomere des Dichtungskörpers kommt vorzugsweise PVC oder Copolymere von PVC in Frage und/oder Elastomere auf der Basis von PP/EPDM oder SEBS oder SBS. Als Material für die Abdeckschicht wird bevorzugt der Einsatz eines Polyolefins, bevorzugt Polypropylen oder Polyethylen oder deren Copolymere oder deren Terpolymere vorgeschlagen und/oder der Einsatz von Polyelastomeren und/oder von PVC oder Copolymeren von PVC, besonders bevorzugt durch Zusatz von Weichmachern weichgemacht.

Zum Einstellen der Eigenschaften ausreichende Lackanhaftung und gute Ablösbarkeit von der zu schützenden Oberfläche kann auch der Einsatz einer Abmischung zweier oder mehrer Produkte aus den oben genannten Produktgruppen zielführend sein.

Eine erste bevorzugte Materialkombination von Dichtungskörper und Abdechtschicht ist dadurch gekennzeichnet, dassder Dichtungskörper mit PVC oder Copolymeren vom PVC gebildet ist, vorzugsweise durch Zusatz von Weichmacher weich gemacht, und dass die Abdeckschicht (44) mit Polyolefinen gebildet ist, vorzugsweise Polypropylen oder Polyäthylen, vorzugsweise deren Copolymeren oder Terpolymeren.

Eine bevorzugte zweite alternative Materialkombination von Dichtungskörper und Abdeckschicht ist dadurch gekennzeichnet, dass der Dichtungskörper mit Elastomeren auf Basis PP/EPDM oder SEBS oder SBS gebildet ist und dass die Abdeckschicht (44) mit thermoplastischen Polyurethanelastomeren gebildet ist. Alternativ kann der Abdeckfilm auch aus PVC oder Copolymeren von PVC, gegebenenfalls durch Weichmacher weichgemacht hergestellt werden.

Um das Anhaften des Lacks auf der Abdeckschicht zur Vermeidung von Lackbrücken oder Lackflusen beim Abziehen der Abdeckschicht weiter zu verbessern, wird ferner vorgeschlagen, die Abdeckschicht einer entsprechenden Oberflächenbehandlung zu unterziehen, ähnlich wie dies beim Bedrucken von Kunststofffolien praktiziert wird. Von den verschiedenen Möglichkeiten der Oberflächenbehandlung hat sich der Einsatz eines entsprechenden Primers bewährt, wobei alternativ oder zusätzlich auch noch Behandlungsmaßnahmen der Abdeckschichtoberfläche in Frage kommen, die die Oberflächenspannung erhöhen. Dies kann insbesondere durch Beflämmung, Plasmaentladung oder Funkenentladung (Korona) erreicht werden. Bei Einsatzes eines Materials für den Abdeckfilm mit ausreichender Lackanhaftung kann auf den Vorbehandlungsschritt verzichtet werden.

Besonders bevorzugt ist der Einsatz der erfindungsgemäßen Leiste als Dachzierleiste, wobei aber auch andere Anwendungsarten wie eingangs angesprochen in Frage kommen, so z.B. auch die einer seitlichen Kraftfahrzeugstoßleiste.

Die Erfindung betrifft auch ein Verfahren zur Herstellung einer Extrusionsleiste, insbesondere für Kraftfahrzeuge, mit einer die Leiste nur bereichsweise abdeckenden Lackschicht. Die Aufgabe der Erfindung wird gemäß einem weiteren Aspekt durch ein Verfahren mit den Merkmalen von Anspruch 13 gelöst. Das erfindungsgemäße Verfahren umfasst die Schritte: Maskieren der Leiste mit einer in Form eines Schutzfilms anextrudierten, abziehbaren Abdeckschicht; Lackieren der Leiste; und Abziehen der Abdeckschicht. Mit diesem Verfahren lässt sich eine wenigstens einen unlackierten Bereich aufweisende Extrusionsleiste mit minimalem Aufwand herstellen. Dies gilt vor allem dann, wenn man die Abdeckschicht im Koextrusionsverfahren zusammen mit der Leiste herstellt.

Um ein besonders gutes Anhaften der Lackschicht auf der Abdeckschicht sicherzustellen, welches eine glatte geradlinige Abreißkante, und damit Lackierungsgrenze sicherstellt, wird vorgeschlagen, dass man die Abdeckschicht vor dem Lackieren einer Oberflächenbehandlung unterzieht, vorzugsweise einer Plasmabehandlung oder Funkenbehandlung.

Die Erfindung wird im folgenden anhand der Zeichnung beispielhaft erläutert.

Es zeigt
- Figur 1: einen Querschnitt einer erfindungsgemäßen Leiste vor dem Lackieren (linke Hälfte) und nach dem Lackieren (rechte Hälfte), jedoch jeweils vor der Montage; und
- Figur 2: einen Querschnitt der Leiste gemäß Figur 1 in montiertem Zustand.

Die erfindungsgemäße Extrusionsleiste ist allgemein mit 10 bezeichnet. Sie besteht aus einem Hauptkörper 12 mit angenähert C-förmigem Querschnitt und zwei Dichtungskörpern 14 an den beiden Bandrändern. Der Hauptkörper 12 selbst weist ein die Innenseite des Hauptkörpers bildendes Metallband 16 auf, sowie eine an die Außenseite der C-Form aufextrudierte Kunststoffschicht 18. Das Metallband 16 wird bevorzugt von einem dünnen aber aufgrund der C-Form ziemlich stabilen Edelstahl- oder Aluband gebildet und die Kunststoffschicht 18 bevorzugt von einem Zäh-Elastomer, vorzugsweise PVC mit einer Härte von Shore-D von 65 plus/minus 5.

Hingegen werden die beiden Dichtungskörper 14 von jeweils einem Weich-Elastomer gebildet mit einer Härte von Shore -A im Bereich von 75 plus/minus 5. Man erkennt, dass die beiden Dichtungskörper 14 jeweils an die Außenseite der Kunststoffschicht 18 anextrudiert sind.

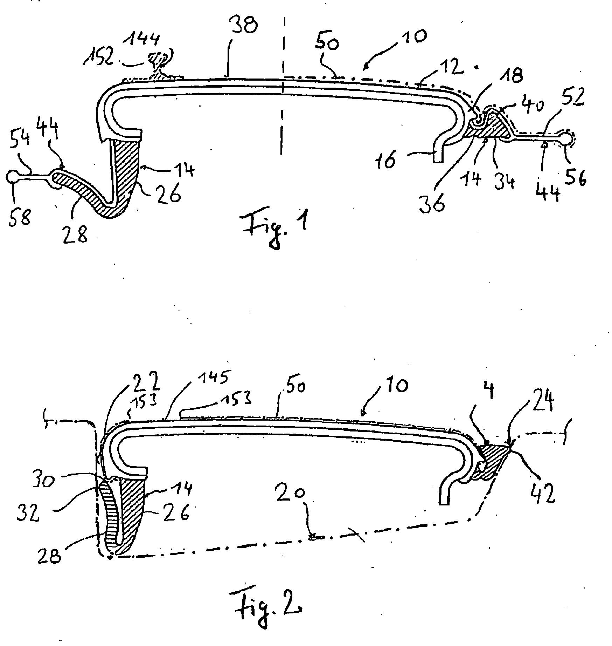

In Figur 2 ist schematisch die Einbau-Situation dargestellt, in der die Leiste 10, hier in Form einer Dachzierleiste, in eine im Querschnitt angenähert rechteckförmige und nach oben offene Karosserienut 20 eingesetzt ist. Dabei liegen beide Dichtungskörper 14 abdichtend an der linken Seitenflanke 22 bzw. rechten Seitenflanke 24 der Nut 20 an. Der in den Figuren linken Dichtungkörper 14 ist hierzu im Querschnitt im wesentlichen V-förmig gebildet mit einem vom Hauptkörper 12 abstehenden festen Schenkel 26 und einem von diesem abstehenden freien Schenkel 28. Im montierten Zustand gemäß Figur 2 ist der freie Schenkel 28 zum festen Schenkel 26 hin gebogen, so dass er unter entsprechender Federvorspannung mit seinem freien Rand 30 an der Flanke 22 abdichtend anliegt, idealerweise längs einer Dichtlinie 32.

Der in den Figuren rechte Dichtungskörper 14 weist einen hakenähnlich geformten Dichtungsabschnitt 34 auf, der mit dem Hauptkörper 12 über einen Abknikkungsabschnitt 36 mit dementsprechend etwas reduziertem Materialquerschnitt verbunden ist. In der unverformten Ausgangsposition gemäß Figur 1 ragt der Abschnitt 34 vom Dichtungshauptkörper nach rechts weg, also in einer Richtung parallel zur leicht gebogenen Oberseite (= Schauseite) 38 der Leiste 10. Ein als Dichtnase ausgebildeter Vorsprung 40 des Abschnitts 34 weist nach oben.

In der Montageposition gemäß Figur 2 dagegen ist der Abschnitt 34 nach unten gebogen, so dass der Vorsprung 40 unter entsprechender Vorspannung an der Flanke 24 anliegt wiederum idealerweise eine Dichtlinie 42 mit der Karosserie bildend.

Die jeweilige Dichtfläche mit den Dichtlinien 32 und 42 muss von Lack frei gehalten werden, da sonst die Dichtfunktion nicht mehr voll gegeben ist, insbesondere aufgrund der deutlich reduzierten Elastizität aufgrund der aufgebrachten Lackschicht.

Gemäß der vorliegenden Erfindung wird daher vor dem Lackieren der Leiste 10 jeweils eine Abdeckschicht in Form eines Schutzfilms 44 auf die beiden Dichtungskörper 14 aufextrudiert, also im Koextrusionsverfahren mit der Kunststoffschicht 18 und dem jeweiligen Dichtungskörper 14 auf das Metallband 16 aufgebracht, wobei das Metallband 16 vor dem Einführen in den Extrusionskopf durch entsprechende Vorformung die angenähert C-förmige Querschnittsform erhält. Hierbei reicht es an sich, wenn die jeweilige Dichtungsfläche mit den Dichtlinien 32, 42 abgedeckt wird. Da generell eine Lackschicht auf dem Dichtungskörper 14 dessen Flexibilität beeinträchtigt, erstreckt sich im besonders bevorzugten Ausführungsbeispiel der Schutzfilm 44 auch auf den zwischen Dichtungsfläche und Hauptkörper 12 erstreckenden Oberflächenbereich der beiden Dichtungskörper 14. Die in Figur 1 nach unten bzw. innen weisenden Oberflächenbereiche der beiden Dichtungskörper 14 sind im vorliegenden Fall mit Spritzlackierung der Leiste 10 (in Figur 1 von oben) ohne Schutzfilm, was das spätere Abziehen erleichtert und geringeren Materialeinsatz zur Folge hat. Diese Oberflächenbereiche bleiben frei von Lack, wenn die Leiste in Figur 1 von oben her spritzlackiert wird.

Im ebenfalls möglichen Falle einer Tauchlakkierung der Leiste 10 würde dagegen bevorzugt der gesamte jeweilige Dichtkörper 14 jeweils vom Schutzfilm 44 ummantelt.

Die so mit zwei Schutzfilmen 44 präparierte Leiste 10 wird anschließend lackiert, so dass man auf deren Oberseite die in Figur 1 rechts und in Figur 2 mit Strich-Punkt-Linie symbolisierte Lackschicht 50 erhält. Diese erstreckt sich also auch über die Oberseite der Abdeckschicht 44.

Anschließend nach dem Trocknen der Lackschicht 50 oder spätestens vor der Montage am Kraftfahrzeug wird dann der jeweilige Schutzfilm 44 an beiden Rändern der Leiste 10 abgezogen. Die wird durch die spezielle Formgebung der Abdeckschicht erleichtert, nämlich durch jeweils einen im unverformten Zustand der beiden Dichtungskörper 14 gemäß Figur 1 seitlich nach rechts abstehenden Steg 52 bzw. nach links abstehenden Steg 54. Beide Stege sind mit einer im Querschnitt angenähert kreisförmigen Verdickung 56 bzw. 58 versehen, die das Abziehen des Schutzfilms 44 erleichtert.

Das Abziehen kann von Hand erfolgen oder auch maschinell. So ist es denkbar, die Verdickung 56 bzw. 58 in eine angepasste Nut eines entsprechenden Werkzeugs einzufädeln, wobei sich die Nut in Förderrichtung der Liste zunehmend von der Leiste 10 entfernt und damit selbsttätig ein Abziehen des Schutzfilms 44 sicherstellt.

Erfindungsgemäß lässt sich der Schutzfilm 44 von den beiden Dichtungskörpern leicht abziehen, ohne dass die Gefahr besteht, dass beim Abziehen der Schicht Lackbrücken oder Lackflusen entstehen. Dies wird durch eine spezielle Materialkombination von Dichtungskörper und Schutzfilm erreicht. Von der Vielzahl der möglichen Materialkombinationen hat sich besonders bewährt ein Dichtungskörper aus PVC, vorzugsweise weich gemacht durch den Zusatz von Weichmachern, sowie ein Schutzfilm aus Polyolefinen, vorzugsweise Polypropylen oder Polyethylen, vorzugsweise deren Copolymeren oder Terpolymeren. Besonders hat sich EVA (Ethylen/Vinylacetat/Copolymer) als Schutzfilmmaterial bewährt. Alternativ kommt auch in Frage, den Dichtungskörper mit Elastomeren zu bilden, insbesondere auf Basis PP(Polypropylen)/EPDM (Ethylen/Propylen/Dien/Terpolymer) oder SEBS (Styrol/Ethylen/Bytylen/Styrol) oder SBS (Styrol/Butalien/Styrol), woher dann der Schutzfilm mit thermoplastischen Polyurethanelastomeren gebildet ist. Alternativ kommen hier auch PVC, Copolymere des PVC, gegebenenfalls auch mit Weichmachern weichgemacht in Frage.

Die erfindungsgemäße Verfahrensweise besteht also darin, vor dem Lackieren einer Extrusionsleiste umfassend einen Hauptkörper mit einer zu lackierenden Schauseite und wenigstens einen an den Hauptkörper anextrudierten Dichtungskörper an den wenigstens einen Dichtungskörper einen nach dem Lackieren abziehbaren Schutzfilm anzuextrudieren, welcher zumindest eine Dichtungsfläche des Dichtungskörpers abdeckt, wobei der Schutzfilm nach dem Lackieren oder vor der Montage abgezogen wird.

Ein weiterer möglicher Verfahrensschritt, der dem Lackierschritt vorangeht, ist die Oberflächenbehandlung des Schutzfilms 44, um die Haftung des Lacks auf dem Schutzfilm zu verbessern, so dass dann beim Trennen keine Lackflusen oder Lackbrücken entstehen. Die Oberflächenbehandlung kann im Auftrag eines Primers bestehen. Zusätzlich oder alternativ kann auch eine Behandlung vorgenommen werden, die die Oberflächenspannung des Schutzfilms erhöht. Dies wird insbesondere durch Beflämmung oder Plasmabehandlung oder Funkenbehandlung (Korona) erreicht werden, was die Haftung des bevorzugt eingesetzten hydrophilen Lackes verbessert. Dieser Schritt kann dann entfallen, wenn das Material des Abdeckfilm selbst ein ausreichende Lackanhaftung aufweist.

Die vorstehend beschriebene Erfindung ist nicht nur mit Vorteil zur Maskierung von Dichtungskörpern bei Extrusionsleisten aus Hauptkörper und Dichtungskörper bzw. Dichtungskörpern einsetzbar, sondern generell bei Extrusionsleisten mit oder ohne Dichtungskörper. Die Abdeckschicht kann nämlich auch zur teilweisen Maskierung der Schauseite der Extrusionsleiste eingesetzt werden, wodurch wiederum reizvolle Effekte erzielbar sind. In den Figuren 1 und 2 ist zur Erläuterung dieses Gedankens der Einsatz einer entsprechenden Abdeckschicht 144 auf der Schauseite der Extrusionsleiste 10 angedeutet und zwar in Figur 1 mit einer strichlierten Umrisslinie, deren Entfernung nach dem Lackieren einen entsprechenden lackfreien Oberflächenstreifen 145 auf der Schauseite der Leiste 10 hinterlässt. Beidseits des Streifens 145 folgt dann die Lackschicht 50, die sich jeweils bis zum Beginn des linken bzw. rechten Dichtungskörpers 14 erstreckt. Man erzielt eine Zweifarbigkeit, wenn die Lackschicht 147 einen anderen Farbton aufweist, als die Oberseite des Hauptkörpers 12. Auch können Oberflächeneffekte erzeugt werden, so z.B., wenn die Oberseite eine Oberflächenstruktur, insbesondere Rauhigkeit aufweist, die im Bereich des Streifens 145 nach dem Lackieren erhalten bleibt, die aber im Gegensatz zur glatten Oberfläche der sich beidseits anschließenden Lackschicht 50 steht.

Auch bei diesem zweiten Ausführungsbeispiel kann die Abdeckschicht 144 mit einer Abziehhilfe versehen sein, wie durch den frei abstehenden Steg 152 mit Verdickung 158 in Figur 1 angedeutet ist. Ferner ist auch bei diesem Ausführungsbeispiel wichtig, dass der Lack zuverlässig an der Abdeckschicht 144 haftet, so dass beim Abziehen der Abdeckschicht 144 eine saubere Abrisskante 153 der Lackschicht 147 gebildet wird. Gemäß Figur 2 begrenzen die beiden Abrisskanten 153 den freiliegenden Streifen 145.

Die erfindungsgemäße lackierte Extrusionsleiste ist also besonders kostengünstig herzustellen, wobei sie aufgrund der Lackierung ein sehr ansprechendes Äußeres aufweist. Bevorzugt ist der Einsatz bei Kraftfahrzeugen, wobei hier insbesondere Zierleisten oder Stoßleisten in Frage kommen.

## Patentansprüche

1. Lackierte Extrusionsleiste, insbesondere für Kraftfahrzeuge, wobei an die Extrusionsleiste wenigstens eine mitlackierte und nach dem Lackieren der Extrusionsleiste abziehbare Abdeckschicht (44; 144) in Form eines Schutzfilms (44; 144) anextrudiert ist.

2. Extrusionsleiste nach Anspruch 1, umfassend einen Hauptkörper (12) mit einer lackierten Schauseite und wenigstens einen an den Hauptkörper (12) anextrudierten Dichtungskörper (14), wobei die Abdeckschicht (44) als der zumindest eine Dichtungsfläche des Dichtungskörpers (14) abdeckende und nach dem Lackieren der Extrusionsleiste abziehbare Schutzfilm (44) an den wenigstens einen Dichtungskörper (14) anextrudiert ist.

3. Extrusionsteiste (10) nach Anspruch 2,
**dadurch gekennzeichnet, dass** sich die Abdeckschicht (44) im wesentlichen von der Schauseite bis zur Dichtungsfläche erstreckt.

4. Extrusionsleiste (10) nach einem der vorhergehenden Ansprüche,
**dadurch gekennzeichnet, dass** die Abdeckschicht (44) mit einer Abziehhilfe versehen ist, wobei vorzugsweise die Abziehhilfe von einem frei abstehenden Steg (52; 54; 152) gebildet ist, vorzugsweise mit Verdickung (56; 58;158) am freien Stegrand.

5. Extrusionsleiste (10) nach einem der vorhergehenden Ansprüche,
**dadurch gekennzeichnet, dass** die Extrusionsleiste, ggf. der Hauptkörper (12) von einem Metallband (16) mit aufextrudierter Kunststoffschicht (18), vorzugsweise PVC-Schicht, gebildet ist.

6. Extrusionsleiste (10) nach einem der Ansprüche 2 bis 5,
**dadurch gekennzeichnet, dass** der bandförmige Hauptkörper (12) mit jeweils einem Dichtungskörper (14) an den beiden Bandrändern versehen ist.

7. Extrusionsleiste (10) nach einem der Ansprüche 2 bis 6,
**dadurch gekennzeichnet, dass** der wenigstens eine Dichtungskörper eine Dichtlippe (Dichtungsline 32; 42) aufweist.

8. Extrusionsleiste (10) nach einem der Ansprüche 2 bis 7,
**dadurch gekennzeichnet, dass** der Dichtungskörper (14) mit einem Elastomer gebildet ist, wobei vorzugsweise der Dichtungskörper (14) mit PVC oder Copolymeren vom PVC, bevorzugt durch Zusatz von Weichmachern weichgemacht, und/oder mit Elastomeren auf der Basis PP/EPDM oder SEBS oder SBS gebildet ist, und dass die Abdeckschicht (44) mit einem Thermoplasten gebildet ist, wobei vorzugsweise die Abdeckschicht (44) mit einem Polyolefin, bevorzugt Polypropylen oder Polyäthylen oder deren Copolymere oder Terpolymere und/oder mit einem Polyurethanelastomer und/oder mit PVC oder Copolymeren von PVC, bevorzugt durch Zusatz von Weichmachern weichgemacht, gebildet ist.

9. Extrusionsleiste (10) nach Anspruch 8, **dadurch gekennzeichnet, dass** der Dichtungskörper (14) mit PVC oder Copolymeren vom PVC gebildet ist, vorzugsweise durch Zusatz von Weichmacher weich gemacht, und dass die Abdeckschicht (44) mit Polyolefinen gebildet ist, vorzugsweise Polypropylen oder Polyäthylen, vorzugsweise deren Copolymeren oder Terpolymeren.

10. Extrusionsleiste (10) nach Anspruch 8, **dadurch gekennzeichnet, dass** der Dichtungskörper mit Elastomeren gebildet ist, insbesondere auf Basis PP/EPDM oder SEBS oder SBS und dass die Abdeckschicht (44) mit thermoplastischen Polyurethanelastomeren gebildet ist.

11. Extrusionsleiste (10) nach einem der vorhergehenden Ansprüche,
**dadurch gekennzeichnet, dass** die Abdeckschicht (44) oberflächenbehandelt ist zur Verbesserung der Lackhaftung, vorzugsweise mittels Primer und/oder durch die Oberflächenspannung erhöhende Maßnahmen.

12. Extrusionsleiste (10) nach einem der vorhergehenden Ansprüche,
**dadurch gekennzeichnet, dass** sie als Dachzierleiste ausgebildet ist

13. Verfahren zur Herstellung einer Extrusionsleiste (10), insbesondere für Kraftfahrzeuge, mit einer die Leiste (10) nur bereichsweise abdeckenden Lackschicht mit den Schritten:
- Maskieren der Leiste (10) mit einer in Form eines Schutzfilms (44) anextrudierten, abziehbaren Abdeckschicht (44);
- Lackieren der Leiste (10); und
- Abziehen der Abdeckschicht (44).

14. Verfahren zur Herstellung einer Extrusionsleiste (10) nach Anspruch 13,
**dadurch gekennzeichnet, dass** man die Abdeckschicht (44) im Koextrusionsverfahren zusammen mit der Leiste (10) herstellt.

15. Verfahren zur Herstellung einer Extrusionsleiste (10) nach Anspruch 13 oder 14,
**dadurch gekennzeichnet, dass** man die Abdeckschicht (44) vor dem Lackieren einer Oberflächenbehandlung unterzieht, vorzugsweise einer Plasmabehandlung oder Funkenbehandlung.

## Claims

1. A painted extruded strip, in particular for motor vehicles, wherein at least one cover layer (44;144) in the form of a protective film (44;144), which is painted along therewith and which can be removed after the painting of the extruded strip, is extruded on to the extruded strip.

2. An extruded strip according to Claim 1, comprising a main body (12) with a painted visible side and at least one sealing body (14) extruded on to the main body (12), wherein the cover layer (44) as the protective film (44), which covers at least one sealing surface of the sealing body (14) and which can be removed after the painting of the extruded strip, is extruded on to the at least one sealing body (14).

3. An extruded strip (10) according to Claim 2, **characterised in that** the cover layer (44) extends essentially from the visible side to the sealing surface.

4. An extruded strip (10) according to any one of the preceding Claims, **characterised in that** the cover layer (44) is provided with a removal aid, wherein preferably the removal aid is formed by a freely protruding web (52;54;152), preferably with a thickening (56;58;158) at the free edge of the web.

5. An extruded strip (10) according to any one of the preceding Claims, **characterised in that** the extruded strip, optionally the main body (12), is formed by a metal band (16) with a plastics layer (18), preferably a PVC layer, which is extruded thereon.

6. An extruded strip (10) according to any one of the Claims 2 to 5, **characterised in that** the band-shaped main body (12) is provided with a respective sealing body (14) at both edges of the band.

7. An extruded strip (10) according to any one of the Claims 2 to 6, **characterised in that** the at least one sealing body has a sealing lip (sealing line 32;42).

8. An extruded strip (10) according to any one of the Claims 2 to 7, **characterised in that** the sealing body (14) is formed with an elastomer, wherein preferably the sealing body (14) is plasticised with PVC or copolymers of PVC, preferably with the addition of plasticisers, and/or is formed with PP/EPDM or SEBS or SBS-based elastomers, and **in that** the cover layer (44) is formed with a thermoplastic, wherein preferably the cover layer (44) is formed with a polyolefin, preferably polypropylene or polyethylene or their copolymers or terpolymers and/or with a polyurethane elastomer and/or with PVC or copolymers of PVC, preferably plasticised with the addition of plasticisers.

9. An extruded strip (10) according to Claim 8, **characterised in that** the sealing body (14) is formed with PVC or copolymers of PVC, preferably plasticised with the addition of plasticisers, and **in that** the cover layer (44) is formed with polyolefins, preferably polypropylene or polyethylene, preferably their copolymers or terpolymers.

10. An extruded strip (10) according to Claim 8, **characterised in that** the sealing body is formed with elastomers, in particular PP/EPDM or SEBS or SBS-based elastomers, and **in that** the cover layer (44) is formed with thermoplastic polyurethane elastomers.

11. An extruded strip (10) according to any one of the preceding Claims, **characterised in that** the cover layer (44) is surface-treated to improve the paint adhesion, preferably by means of a primer and/or measures to increase the surface tension.

12. An extruded strip (10) according to any one of the preceding Claims, **characterised in that** it is formed as a roof trim strip.

13. A method of producing an extruded strip (10), in particular or motor vehicles, with a paint layer only covering certain regions of the strip (10), with the steps of:
- masking the strip (10) with a removable cover layer (44) in the form of a protective film (44), which is applied by extrusion;
- painting the strip (10), and
- removing the cover layer (44).

14. A method of producing an extruded strip (10) according to Claim 13, **characterised in that** the cover layer (44) is produced together with the strip (10) using a co-extrusion process.

15. A method of producing an extruded strip (10) according to Claim 13 or 14, **characterised in that** the cover layer (44) is subjected to a surface treatment prior to painting, preferably a plasma treatment or spark treatment.

## Revendications

1. Baguette extrudée vernie, en particulier pour véhicules automobiles, dans laquelle est formée par extrusion sous la forme d'un film protecteur (44 : 144) sur la baguette extrudée au moins une couche de recouvrement (44 ; 144) vernie conjointement et apte à être enlevée après le vernissage de la baguette extrudée.

2. Baguette extrudée selon la revendication 1, comportant un corps principal (12) avec une face visible vernie et au moins un corps d'étanchéité (14), formé par extrusion sur le corps principal (12), dans laquelle est formée par extrusion sur l'au moins un corps d'étanchéité (14) la couche de recouvrement (44) en tant que film protecteur recouvrant au moins une surface d'étanchéité du corps d'étanchéité (14) et apte à être enlevée après le vernissage de la baguette extrudée.

3. Baguette extrudée (10) selon la revendication 2,
**caractérisée en ce que** la couche de recouvrement (44) s'étend sensiblement depuis la face visible jusqu'à la surface d'étanchéité.

4. Baguette extrudée (10) selon l'une quelconque des revendications précédentes,
**caractérisée en ce que** la couche de recouvrement (44) est munie d'une aide à l'enlèvement, l'aide à l'enlèvement étant formée de préférence par une ailette (52 ; 54 ; 152) librement saillante, de préférence avec un renflement (56 ; 58 ; 158) sur le bord libre de l'ailette.

5. Baguette extrudée (10) selon l'une quelconque des revendications précédentes, **caractérisée en ce que** la baguette extrudée, le cas échéant le corps principal (12), est formée par une bande métallique (16), sur laquelle est extrudée une couche en matière plastique (18), de préférence une couche de PVC.

6. Baguette extrudée (10) selon l'une quelconque des revendications 2 à 5,
**caractérisée en ce que** le corps principal (12) en forme de bande est muni respectivement d'un corps d'étanchéité (14) au niveau des deux bords de la bande.

7. Baguette extrudée (10) selon l'une quelconque des revendications 2 à 6,
**caractérisée en ce que** l'au moins un corps d'étanchéité (14) présente une lèvre d'étanchéité (ligne d'étanchéité 32 ; 42).

8. Baguette extrudée (10) selon l'une quelconque des revendications 2 à 7,
**caractérisée en ce que** le corps d'étanchéité (14) est formé avec un élastomère, le corps d'étanchéité (14) étant, de préférence, plastifié avec du PVC ou des copolymères du PVC, de manière préférée par l'ajout de plastifiants, et/ou étant formé avec des élastomères à base de PP/EPDM ou SEBS ou SBS, et **en ce que** la couche de recouvrement (44) est formée avec une matière thermoplastique, la couche de recouvrement (44) étant formée de préférence avec une polyoléfine, de manière préférée du polypropylène ou du polyéthylène ou des copolymères ou des terpolymères de ceux-ci et/ou avec un élastomère polyuréthane et/ou étant plastifiée avec du PVC ou des copolymères du PVC, de manière préférée par l'ajout de plastifiants.

9. Baguette extrudée (10) selon la revendication 8, **caractérisée en ce que** le corps d'étanchéité (14) est formé avec du PVC ou des copolymères du PVC, de préférence est plastifié par l'ajout de plastifiants, et **en ce que** la couche de recouvrement (44) est formée avec des polyoléfines, de préférence du polypropylène ou du polyéthylène, de préférence des copolymères ou des terpolymères de ceux-ci.

10. Baguette extrudée (10) selon la revendication 8, **caractérisée en ce que** le corps d'étanchéité est formé avec des élastomères, en particulier à base de PP/EPDM ou SEBS ou SBS, et que la couche de recouvrement (44) est formée avec des élastomères polyuréthanes thermoplastiques.

11. Baguette extrudée (10) selon l'une quelconque des revendications précédentes,
**caractérisée en ce que** la couche de recouvrement (44) a subi un traitement de surface pour améliorer l'adhérence du vernis, de préférence au moyen d'une couche de fond et/ou par des mesures augmentant la tension superficielle.

12. Baguette extrudée (10) selon l'une quelconque des revendications précédentes,
**caractérisée en ce qu'**elle est réalisée sous la forme d'une baguette de décor du toit.

13. Procédé pour la fabrication d'une baguette extrudée (10), en particulier pour des véhicules automobiles, munie d'une couche de vernis masquant la baguette (10) seulement par zones, comportant les étapes suivantes :
- le masquage de la baguette (10) avec une couche de recouvrement (44) pouvant être enlevée, extrudée sur ladite baguette sous la forme d'un film protecteur (44) ;
- le vernissage de la baguette (10) ; et
- l'enlèvement de la couche de recouvrement (44).

14. Procédé pour la fabrication d'une baguette extrudée (10) selon la revendication 13,
**caractérisé en ce que** la couche de recouvrement (44) est fabriquée conjointement avec la baguette (10) dans le procédé de coextrusion.

15. Procédé pour la fabrication d'une baguette extrudée (10) selon la revendication 13 ou 14,
**caractérisé en ce que**, avant le vernissage, la couche de recouvrement (44) est soumise à un traitement de surface, de préférence à un traitement plasma ou à un traitement par étincelage.
